(19) Europäisches Patentamt
European Patent Office
Office européen des brevets

(11) **EP 2 325 512 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(51) Int Cl.:
***F16D 48/06*** *(2006.01)*

(21) Anmeldenummer: **10191289.7**

(22) Anmeldetag: **16.11.2010**

(54) **Verfahren zur Kisspointadaption**

Kiss point adaptation method

Procédé d'adaptation du point de contact

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2009 DE 102009053885**

(43) Veröffentlichungstag der Anmeldung:
**25.05.2011 Patentblatt 2011/21**

(73) Patentinhaber: **GETRAG Getriebe- und Zahnradfabrik Hermann Hagenmeyer GmbH & Cie KG 74199 Untergruppenbach (DE)**

(72) Erfinder:
• **Blessing, Uli Christian 74078, Heilbronn (DE)**
• **Schürlein, Markus 71691, Freiberg am Neckar (DE)**
• **Meissner, Jörg 74626, Bretzfeld (DE)**

(74) Vertreter: **Witte, Weller & Partner Patentanwälte mbB Postfach 10 54 62 70047 Stuttgart (DE)**

(56) Entgegenhaltungen:
EP-A1- 2 098 745          EP-A1- 2 107 263
EP-A1- 2 107 264          WO-A1-2009/065458
DE-A1-102008 011 082

**Beschreibung**

Die vorliegende Erfindung betrifft ein Verfahren zum Einstellen des Einrückpunktes einer Reibkupplung eines Stufengetriebes für ein Kraftfahrzeug, insbesondere einer Reibkupplung eines Doppelkupplungsgetriebes.

In Antriebssträngen mit einem Stirnradgetriebe ist generell zwischen dem Stirnradgetriebe und einem Antriebsmotor (wie einem Verbrennungsmotor) eine Reibkupplung angeordnet, die die Funktion einer Anfahr- und Trennkupplung hat. Bei Doppelkupplungsgetrieben ist zwischen den zwei Teilgetrieben und dem Antriebsmotor eine Doppelkupplungsanordnung vorgesehen. Diese Reibkupplungen können als trocken- oder als nasslaufende Kupplungen ausgebildet sein und unterliegen einem gewissen Verschleiß. Bei herkömmlichen handgeschalteten Getrieben wird der zunehmende Verschleiß der Kupplung durch eine geänderte Betätigung der Kupplung seitens des Fahrers kompensiert.

Bei automatisierten Stirnradgetrieben (wie automatisierten Schaltgetrieben (ASG) oder Doppelkupplungsgetrieben (DKG)) erfolgt die Betätigung der Reibkupplung generell durch einen zugeordneten Kupplungsaktuator. Der Kupplungsaktuator kann beispielsweise ein hydraulischer oder ein elektromechanischer Aktuator sein.

Der Aktuator kann zudem entweder druck-, kraft- oder weggesteuert ausgebildet sein.

Die Reibkupplung ist als Lastkupplung dazu ausgelegt, zumindest kurzzeitig auch hohe Drehmomente zu übertragen, die dem Drehmoment, das von dem Antriebsmotor abgegeben wird, entsprechen oder meist sogar größer sind. Für ein komfortables Einkuppeln ist die Reibkupplung vom geöffneten Zustand über einen Schlupfzustand in den geschlossenen Zustand zu überführen. Dabei legen sich das Eingangsglied und das Ausgangsglied der Reibkupplung aneinander an, wobei ab einem bestimmten Zeitpunkt ein Drehmoment übertragen wird. Als Einrückpunkt der Reibkupplung, bei dem eine gewisse Übertragung eines Momentes möglich ist, wird ein Punkt definiert (ein Stellwert des Kupplungsaktuators), bei dem die Reibkupplung ein bestimmtes, relativ kleines Drehmoment überträgt, beispielsweise einen Wert < 20 Nm.

Für sichere, komfortable und auch schnelle Schaltvorgänge ist es in automatisierten Stufengetrieben von großer Bedeutung zu wissen, bei welchem Stellwert des Kupplungsaktuators dieser Einrückpunkt erreicht ist. Wie oben erwähnt, kann sich dieser aufgrund von Verschleiß (beispielsweise der Kupplungslamellen), mechanischer Toleranzen oder durch andere Störgrößen (z.B. Setzen der Kupplungsfedern) im Laufe der Zeit ändern. Auch relativ kurzfristig veränderbare Parameter, wie beispielsweise die Temperatur, spielen hierbei eine Rolle.

Es sind diverse Verfahren im Stand der Technik bekannt geworden, um den Einrückpunkt einer Reibkupplung einzustellen.

Das Dokument DE 196 52 244 A1 betrifft ein Verfahren zur Kisspointadaption, wobei das Motormoment als wichtiger Parameter gemessen wird. Ein Grundansatz besteht darin, mehrere Betriebspunkte anzufahren, um hieraus über Mittelwertbildung eine sichere Adaption zu erzielen.

Aus der WO 2004/076224 A1 ist es bekannt, das von einer Reibkupplung übertragene Drehmoment über einen Vergleich der Drehzahlen von Motor und Getriebeeingang zu bestimmen, und zwar unter Berücksichtigung der Ansynchronisierkraft, insbesondere im Schubbetrieb während des Ansteigens der Einrückkraft.

Eine Kennlinienadaption bei laufendem Motor ist aus der WO 2004/076225 A1 bekannt, wobei die Kupplung mit einem definierten Wert geschlossen wird, anschließend ein Gang zunehmend ansynchronisiert wird und dann die Synchronisierstellgröße ermittelt wird, bei der sich die Drehzahlen von Getriebeeingang und Motor voneinander lösen.

Die EP 0 931 961 A1 betrifft ein Eichverfahren für eine Steuerkupplung bei konstanter Motordrehzahl, wobei der Kupplungseichwert aus einer Zieldrehzahländerungszeit gewonnen wird, die aus einer Profilwiderstandszeit bestimmt wird. Die Profilwiderstandszeit repräsentiert eine von der Reibcharakteristik abhängende Drehzahländerung, wobei insbesondere die Kupplung geöffnet und geschlossen und die Zeit gemessen wird, innerhalb der sich die Drehzahl eines Zahnrades um einen bestimmten Betrag verändert.

Ein ähnliches, iteratives Verfahren ist aus der EP 0 859 171 A1 bekannt.

Das Dokument DE 195 40 921 A1 betrifft den Gedanken, eine Kupplung willkürlich anzusteuern, um den Zusammenhang zwischen Kupplungsmoment und Stellgröße herzustellen.

Ein Verfahren zum Steuern der Drehmomentübertragung ist ferner aus der DE 199 39 818 C1 bekannt. Dabei soll die Fahrgeschwindigkeit durch Einrücken einer Kupplung ungleich Null sein, wobei eine parallele Kupplung ausgerückt gehalten wird. Der Eingriffspunkt der parallelen Kupplung wird ermittelt durch wenigstens teilweises Einrücken dieser Kupplung, wobei insbesondere die zeitliche Drehzahländerung einer Kupplungshälfte gemessen wird.

Die DE 102 44 393 A1 betrifft die Bestimmung des Eingriffspunktes durch Messen des Druckverlaufes und durch Bestimmen der ersten Ableitung hiervon an einem Hydraulikzylinder.

Aus der DE 100 54 867 A1 ist ein Verfahren zur Bestimmung eines Kriechpunktes einer Reibkupplung bekannt. Ein erster Kriechpunkt wird eingestellt und das Kupplungsmoment gemessen. Dann wird ein zweiter Kriechpunkt eingestellt, wenn im ersten Schritt keine Übereinstimmung vorhanden ist. Dabei wird als Bezugspunkt ein zwischen Schleifpunkt und erstem Kriechpunkt liegender Wert gewählt. Dann wird der neue zweite Kriechpunkt so eingestellt, dass eine Übereinstimmung von gewünschtem und tatsächlich übertragenem Moment erfolgt.

Ein Verfahren zur Bestimmung eines Motorreibmomentes ist aus der DE 101 13 700 A1 bekannt. Das Verfahren wird dazu benutzt, um aus dem Motormoment das an der Reibkupplung anliegende Moment zu ermitteln.

Ferner ist ein Verfahren zur Ermittlung eines Greifpunktes einer Reibkupplung aus der EP 1 741 950 A1 bekannt. Eine Reibkupplung wird geöffnet, so dass die Getriebeeingangsdrehzahl abfällt. Dann wird die Kupplung wieder geschlossen, bis der Abfall der Drehzahl gestoppt ist. Anschließend wird die Kupplung weiter geschlossen, bis die Drehzahl gleich bleibt oder abfällt. Hieraus wird der Greifpunkt berechnet.

Ein Verfahren zur Gangwechselsteuerung, bei dem das Motormoment und das Kupplungsmoment gesteuert werden, ist aus der DE 101 01 597 A1 bekannt. Die Steuerung erfolgt in Abhängigkeit von Drehzahldifferenzen.

Das Dokument DE 197 51 455 A1 betrifft ein Verfahren zur Kupplungsregelung, wobei eine Soll-Kupplungskapazität durch einen Regler anhand einer Kennfunktion eingestellt wird. Die Kennfunktion wird dabei laufend adaptiert.

Ein Verfahren zum Gangwechseln ist aus der DE 102 24 064 A1 bekannt. Dabei erfolgt ein Lösen einer Synchronisierung durch Ermitteln eines "Abschaltpunktes", der von einem Gradienten der Drehzahl des synchronisierten Zahnrades abhängt.

Aus der EP 1 067 008 A1 ist ein Verfahren zur Kupplungskennlinienadaption bekannt, und zwar für ein Doppelkupplungsgetriebe.

Hierbei soll jeweils die Kupplungskennlinie einer Kupplung adaptiert werden, die momentan nicht zur Übertragung eines Drehmomentes genutzt wird (die so genannte freie Reibkupplung). Diese wird zunächst mit einer bestimmten Kupplungsstellkraft geschlossen, und es wird gewartet, bis die Getriebeeingangswelle die Synchrondrehzahl erreicht hat (also mit der Motorwelle mitläuft). Anschließend wird eine Synchronisierung des zugeordneten freien Teilgetriebes betätigt, bis eine ausreichende Drehzahldifferenz vorhanden ist. Dann wird diese Synchronisierung gelöst, und es wird anschließend der Drehzahlgradient der Getriebeeingangswelle bestimmt. Hieraus wird der Wert des zuvor übertragenen Kupplungsmomentes berechnet. Anhand dieses Wertes wird in Verbindung mit der zuvor festgelegten Kupplungsstellkraft eine Kupplungskennlinienadaption durchgeführt.

Ferner ist ein schnelles Verfahren zum Einstellen des Einrückpunktes einer Reibkupplung aus der WO 2009/065591 bekannt.

Das Dokument EP 2 107 264 betrifft ein Verfahren zum Bestimmen eines Schleifpunkts einer Kupplung eines Hybridfahrzeugs beim Starten. Das Fahrzeug weist einen Verbrennungsmotor und eine Elektromaschine auf, die über eine Kupplung miteinander gekuppelt sind. Bei dem vorgeschlagenen Verfahren wird zunächst die Drehzahl der Elektromaschine bei stillstehendem Verbrennungsmotor und offener Kupplung auf eine Solldrehzahl eingestellt. Anschließend wird die Kupplung allmählich geschlossen. Sobald eine Variation der Verlangsamung der Elektromaschine größer ist als ein Schwellenwert, wird die aktuelle Position des Betätigungselements der Kupplung als Schleifpunkt abgespeichert.

Vor diesem Hintergrund ist es die Aufgabe der Erfindung, ein verbessertes Verfahren zum Einstellen des Einrückpunktes einer Reibkupplung anzugeben.

Diese Aufgabe wird gelöst durch ein Verfahren zum Einstellen des Einrückpunktes einer Reibkupplung eines Stufengetriebes für ein Kraftfahrzeug, wobei das Stufengetriebe ein Doppelkupplungsgetriebe ist, wobei die Reibkupplung mittels eines Kupplungsaktuators gesteuert, vorzugsweise geregelt betätigbar ist, wobei ein Sollwert des Kupplungsaktuators für den Einrückpunkt der Reibkupplung in Abhängigkeit eines zeitlichen Verlaufes einer physikalischen Variablen eingestellt wird, der sich ausgehend von einem Übergangszustand nach Betätigen der Reibkupplung auf einen vordefinierten Übergangswert ergibt, wobei eine elektrische Maschine mit dem Stufengetriebe verbunden ist, wobei eine Beeinflussung des Stufengetriebes durch die elektrische Maschine bei der Einstellung des Einrückpunktes der Reibkupplung berücksichtigt wird, und wobei die Einstellung des Einrückpunktes der Reibkupplung in einem nicht aktiven Zweig des Doppelkupplungsgetriebes erfolgt, während das Fahrzeug fährt.

Durch die Verbindung der elektrischen Maschine mit dem Stufengetriebe kann das Stufengetriebe Teil eines Hybridantriebsstranges eines Kraftfahrzeuges sein. Die elektrische Maschine kann zum Bereitstellen von Antriebmoment betrieben werden (bspw. in einem so genannten Boost-Betrieb). Ferner kann die elektrische Maschine vorzugsweise auch als Generator betrieben werden (zu Rekuperationszwecken).

Die elektrische Maschine kann mit dem Stufengetriebe über eine Kupplung verbunden sein. Vorzugsweise ist die elektrische Maschine mit dem Stufengetriebe jedoch fest verbunden, so dass eine Rotordrehzahl der elektrischen Maschine generell proportional ist zu einer Drehzahl einer Welle des Stufengetriebes. Diese Welle ist vorzugsweise eine Eingangswelle des Stufengetriebes oder eine hiermit fest bzw. konstant verbundene Welle.

Die Beeinflussung des Stufengetriebes durch die elektrische Maschine bei der Einstellung des Einrückpunktes kann auf unterschiedliche Art und Weise erfolgen.

Bei manchen Arten der Beeinflussung ergeben sich bspw. steilere (oder auch flachere) Verläufe der physikalischen Variablen, so dass sich bspw. ein Gradient präziser ermitteln lässt. In diesen Fällen wirkt die elektrische Maschine generell passiv auf das Einstellungsverfahren ein. Vorteilhafterweise ist es jedoch auch möglich, die elektrische Maschine aktiv in das Einstellverfahren einzubeziehen. Hierdurch können besonders schnelle und effiziente Einstellverfahren realisiert werden. Dies kann auch zu schnelleren Einstellverfahren führen.

Ferner kann eine Einstellung des Einrückpunktes auch innerhalb relativ kurzer Phasen erfolgen, in denen das zugeordnete Teilgetriebe im Fahrbetrieb nicht benötigt wird. Ferner ist es möglich, eine eventuell anstehende Schaltung (bei der das freie Teilgetriebe dann benutzt wird) nicht zu verzögern.

Anders herum ergibt sich eine erhöhte Wahrscheinlichkeit, dass das Verfahren zum Einstellen des Einrückpunktes nicht durch eine vom Fahrer bzw. Fahrbetrieb geforderte Schaltung unterbrochen wird.

Ein Übergangswert kann ein fester Wert sein, bei dem die Reibkupplung nur ein vergleichsweise geringes Drehmoment übertragen kann (bspw. < 20 Nm), oder auch beispielsweise ein mit der Zeit veränderliches Signal.

Generell erfolgt die Einstellung des Einrückpunktes unmittelbar in Abhängigkeit von dem ermittelten zeitlichen Verlauf (oder dessen Resultat) der physikalischen Variablen (bspw. ein Drehzahlgradientwert oder ein Stromwert) nach Durchführung des erfindungsgemäßen Verfahrens. Es ist folglich nicht notwendig, das hierbei von der Reibkupplung übertragene Drehmoment zu berechnen. Allerdings besteht zwischen einem ermittelten Wert bzw. Gradientwert und dem von der Reibkupplung in dem Übergangszustand übertragenen Drehmoment ein bestimmter, in der Regel auch berechenbarer Zusammenhang. Mit anderen Worten kann aus dem Wert bzw. Gradientwert auch auf das übertragene Kupplungsmoment geschlossen werden, sofern dies von Interesse ist.

Die Aufgabe wird somit vollkommen gelöst.

Gemäß einer besonders bevorzugten Ausführungsform beinhaltet das Herstellen des Übergangszustandes, die elektrische Maschine auf einen Übergangs-Arbeitspunkt einzustellen.

Bei dieser Ausführungsform kann das Getriebe mittels der elektrischen Maschine in einen definierten Zustand versetzt werden (bspw. auf ein bestimmtes Drehzahlniveau gebracht werden). Dieser definierte Zustand kann folglich vorteilhafterweise erreicht werden, ohne dass es notwendig ist, eine Schaltkupplung zum Ein- bzw. Auslegen einer Gangstufe des Stufengetriebes zu betätigen, wie es im Stand der Technik notwendig ist. Demzufolge kann das erfindungsgemäße Einstellverfahren bspw. in einem Abschnitt zwischen dem Auslegen einer Quellgangstufe und dem Einlegen einer Zielgangstufe in dem freien Teilgetriebe eines Doppelkupplungsgetriebes erfolgen. Da das Verfahren keinen Einfluss auf den Getriebeausgang hat, kann zudem eine Mehrzahl von unterschiedlichen Arbeitspunkten in unmittelbarer Folge eingestellt werden.

Von besonderem Vorteil ist es hierbei, wenn das Herstellen des Übergangszustandes beinhaltet, die elektrische Maschine auf eine Übergangsdrehzahl zu regeln.

Eine solche Drehzahlregelung lässt sich leicht realisieren, da die gemeinsam mit einer elektrischen Maschine implementierte Funktionalität eines Hybrid-Antriebsstranges eine solche Drehzahlregelung in der Regel ohnehin vorsieht. Die Übergangsdrehzahl ist dabei vorzugsweise eine Drehzahl, die sich von einer Antriebsmotordrehzahl unterscheidet, so dass in dem Übergangszustand in der Reibkupplung eine Differenzdrehzahl vorhanden ist.

Bei dieser Ausführungsform ist es ferner bevorzugt, wenn der Sollwert des Kupplungsaktuators für den Einrückpunkt der Reibkupplung in Abhängigkeit eines zeitlichen Verlaufes eines elektrischen Stromes der elektrischen Maschine eingestellt wird (und/oder in Abhängigkeit eines Endwertes des sich einstellenden Stromes), der sich ausgehend von dem Übergangszustand nach Betätigen der Reibkupplung auf den Übergangswert ergibt.

Dabei wird zunächst der Übergangszustand hergestellt, indem die Übergangsdrehzahl in dem Stufengetriebe eingerichtet wird. Anschließend wird die Reibkupplung auf den Übergangswert mittels des Kupplungsaktuators betätigt. Hierdurch wird über das Antriebsmoment des Antriebsmotors ein Drehmoment auf das Stufengetriebe aufgeprägt. Um die Drehzahl konstant auf der Übergangsdrehzahl zu halten (zu regeln), ergibt sich in der elektrischen Maschine eine Änderung des elektrischen Stromes, die proportional ist zu der auf diese Weise kompensierten Drehmomentänderung.

Bei dieser Ausführungsform kann folglich bspw. ein Stromwert ermittelt werden, anhand dessen der Einrückpunkt der Reibkupplung einstellbar ist.

Gemäß einer alternativen Ausführungsform beinhaltet das Herstellen des Übergangszustandes, die elektrische Maschine auf ein Übergangsdrehmoment zu regeln.

Bei dieser Ausführungsform wird der elektrischen Maschine bspw. ein bestimmter elektrischer Strom aufgeprägt, so dass die elektrische Maschine ein bestimmtes Moment abgibt. Hierdurch stellt sich in der Regel in dem Stufengetriebe bei noch geöffneter Reibkupplung eine bestimmte Drehzahl ein. Das Übergangsdrehmoment sollte dabei vorzugsweise so gewählt sein, dass die sich bei noch geöffneter Reibkupplung einstellende Drehzahl von der Antriebsdrehzahl des Antriebsmotors unterscheidet.

Bei dieser Ausführungsform ist es von besonderem Vorzug, wenn der Sollwert des Kupplungsaktuators für den Einrückpunkt der Reibkupplung in Abhängigkeit eines zeitlichen Verlaufes einer Drehzahl eingestellt wird, der sich ausgehend von dem Übergangszustand nach Betätigen der Reibkupplung auf den Übergangswert ergibt.

Wenn die Reibkupplung nach dem Herstellen des Übergangszustandes auf den Übergangswert betätigt wird, wird wiederum von dem Antriebsmotor ein Moment auf das Stufengetriebe übertragen. Da die elektrische Maschine auf ein bestimmtes Übergangsdrehmoment geregelt ist, ergibt sich hierdurch eine Änderung der Drehzahl in dem Stufengetriebe. Durch Ermittlung eines Gradientwertes dieser Drehzahländerung (und/oder eines Endwertes der sich einstellenden Drehzahl) kann wiederum das Einstellen des Einrückpunktes erfolgen.

Während die oben beschriebenen bevorzugten Ausführungsformen zur Beeinflussung des Stufengetriebes durch die elektrische Maschine bei der Einstellung des Einrückpunktes von aktiver Art sind, ist es auch möglich, die elektrische Maschine zu diesem Zweck zu nutzen, ohne die elektrische Maschine auf ein Übergangsdrehmoment oder eine Übergangsdrehzahl zu regeln.

So ist es gemäß einer weiteren alternativen Ausführungsform bevorzugt, wenn die elektrische Maschine als Last an das Stufengetriebe angekoppelt wird, wobei das Herstellen des Übergangszustandes beinhaltet, wenigstens eine Schaltkupplung zum Ein- und Auslegen einer Gangstufe des Stufengetriebes mittels eines Schaltaktuators zu betätigen und wobei der Sollwert des Kupplungsaktuators für den Einrückpunkt der Reibkupplung in Abhängigkeit eines zeitlichen Verlaufes einer Drehzahl eingestellt wird, der sich ergibt, wenn nach dem Herstellen des Übergangszustandes die Schaltkupplung geöffnet wird.

Bei dieser Ausführungsform wird das Stufengetriebe in einen definierten Zustand gebracht, indem die Schaltkupplung betätigt wird. Hierdurch wird dem Stufengetriebe eine Drehzahl proportional zu einer Drehzahl einer Abtriebswelle des Stufengetriebes eingeprägt. Die elektrische Maschine wird dabei als Last mitgeschleppt.

Ferner wird hierbei die Reibkupplung auf einen Übergangswert eingestellt, so dass auch von Seiten des Antriebsmotors ein Moment in das Stufengetriebe übertragen wird. Wenn anschließend die Schaltkupplung geöffnet wird, ergibt sich eine Änderung der Drehzahl, insbesondere einer Drehzahl einer Eingangswelle des Stufengetriebes (und/oder einer Drehzahl der elektrischen Maschine). Ein hieraus ermittelter Gradientwert kann dann zur Einstellung des Einrückpunktes verwendet werden.

Die elektrische Maschine wird dabei als Last mitgeschleppt, so dass sich gegenüber bekannten Verfahren ein veränderter Gradientenwert ergibt. Dies kann in vorteilhafter Weise dazu verwendet werden, um den Einrückpunkt genauer einzustellen.

Gemäß einer Ausführungsform wird die elektrische Maschine dabei während des Übergangszustandes im Leerlauf betrieben. Hierbei ergibt sich das durch die elektrische Maschine in das Stufengetriebe einführte Schleppmoment im Wesentlichen durch mechanische Widerstands- bzw. Reibungsmomente.

Gemäß einer alternativen Ausführungsform wird die elektrische Maschine während des Übergangszustandes im Kurzschluss betrieben.

Bei dieser Ausführungsform wirkt die elektrische Maschine durch die elektromagnetische Induktion wie eine Wirbelstrombremse, so dass sich noch steilere Gradientwerte erzielen lassen.

Bei der Ausführungsform unter Verwendung der elektrischen Maschine als Last ist es vorteilhaft, wenn der Schaltaktuator in dem Übergangszustand dazu angesteuert wird, um die zugeordnete Schaltkupplung zu schließen.

Bei dieser Ausführungsform ist vorteilhaft, dass während des Übergangszustandes im Wesentlichen keine Drehmomentschwankungen über der Schaltkupplung auftreten können und somit zu Beginn der Auswertung des Drehzahlgradientwertes konstante Drehzahlverhältnisse vorhanden sind.

Gemäß einer alternativen Ausführungsform wird der Schaltaktuator in dem Übergangszustand dazu angesteuert, um über die Schaltkupplung ein größeres Drehmoment zu übertragen als über die Reibkupplung, ohne jedoch die zugeordnete Schaltkupplung zu schließen.

Bei dieser Ausführungsform ist vorteilhaft, dass eine etwas höhere Sicherheit gegenüber Fehlersituationen gegeben ist, da die zugeordnete Schaltkupplung des freien Getriebes nicht in den Formschluss gebracht wird.

Bei der Einstellung des Einrückpunktes einer Reibkupplung in einem nicht aktiven Zweig des Doppelkupplungsgetriebes kann die zur Einstellung des Einrückpunktes verwendete Schaltkupplung jeder beliebigen Gangstufe des freien Teilgetriebes zugeordnet sein.

Es ist jedoch von besonderem Vorteil, wenn die zur Einstellung des Einrückpunktes der Reibkupplung verwendete Schaltkupplung jener Gangstufe des freien Teilgetriebes zugeordnet ist, die zu der im aktiven Zweig verwendeten Gangstufe benachbart ist.

Wenn beispielsweise in dem aktiven Zweig die Gangstufe 3 (der dritte Gang) eingelegt ist, kann in dem freien Zweig zur Einstellung des Einrückpunktes der Reibkupplung beispielsweise die Schaltkupplung für die Gangstufe 2 oder die Schaltkupplung für die Gangstufe 4 verwendet werden. Vorteilhaft hierbei ist, dass die aufgetretenen Drehzahldifferenzen nicht zu groß werden, so dass die Abarbeitung des erfindungsgemäßen Verfahrens insgesamt in schnellerer Zeit und mit weniger Verschleiß erfolgen kann.

Von besonderem Vorteil ist es bei allen Ausführungsformen, wenn der Kupplungsaktuator in dem Übergangszustand auf einen Übergangswert eingestellt wird, der dem bisherigen Sollwert für den Einrückpunkt entspricht.

Hierdurch kann sichergestellt werden, dass die Einstellung des Einrückpunktes auf der Grundlage von Bedingungen stattfindet, wie sie auch im normalen Reibkupplungsbetrieb beim Erreichen des Einrückpunktes vorliegen. Generell ist es jedoch auch denkbar, den Kupplungsaktuator in dem Übergangszustand auf einen anderen Wert als den bisherigen Sollwert einzustellen, wobei der Übergangswert so festgelegt sein sollte, dass die Reibkupplung nur ein vergleichsweise geringes Drehmoment übertragen kann (beispielsweise < 20 Nm).

Die Einstellung des Einrückpunktes der Reibkupplung erfolgt in einem nicht aktiven Zweig des Doppelkupplungsgetriebes, während das Fahrzeug fährt.

Bei einem automatisierten Stirnradgetriebe mit nur einer Eingangskupplung und einem einzelnen Getriebezweig kann eine solche Vorgehensweise nicht realisiert werden, da im Fahrbetrieb die einzige Reibkupplung und das Getriebe nicht frei sind. Bei einem Doppelkupplungsgetriebe kann hingegen der freie Zweig (d.h. das freie Teilgetriebe und die freie Reibkupplung) dazu verwendet werden, eine Einstellung des Einrückpunktes der freien Reibkupplung vorzunehmen, und zwar während des Fahrbetriebs und einer Drehmomentübertragung auf den Abtrieb über den anderen Zweig des Doppelkupplungsgetriebes. Es versteht sich, dass auf diese Weise beide Reibkupplungen des Doppelkupplungsgetriebes im Fahrbetrieb angepasst werden, je nachdem, welcher Zweig gerade frei ist.

Während beim Doppelkupplungsgetriebe die Einstellung des Einrückpunktes der Reibkupplung in dem nicht aktiven Zweig während der Fahrt erfolgen kann, kann bei Stufengetrieben die Möglichkeit vorgesehen werden, die Einstellung des Einrückpunktes der Reibkupplung durchzuführen, während das Fahrzeug steht.

Diese Variante kann natürlich bei Doppelkupplungsgetrieben angewendet werden, unter anderem beim Einlernen des Einrückpunktes einer Kupplung. Beispielsweise kann diese Variante jedoch auch bei einem automatisierten Stirnradgetriebe mit nur einer Reibkupplung und einem einzelnen Getriebezweig durchgeführt werden.

Generell ist es sowohl bei derartigen automatisierten Schaltgetrieben als auch bei Doppelkupplungsgetrieben möglich, während des Stillstandes des Fahrzeuges das Einstellen des Einrückpunktes durchzuführen, wenn das Herstellen des Übergangszustandes beinhaltet, die elektrische Maschine auf einen Übergangs-Arbeitspunkt einzustellen, wie oben erwähnt. In diesem Fall bleiben die Schaltkupp-lungen des Stufengetriebes geöffnet, so dass keine Antriebsleistung auf die angetriebenen Räder übertragen wird.

Bei dieser Ausführungsform wie auch bei sämtlichen anderen Ausführungsformen ist es hierbei vorteilhaft, wenn ein Antriebsmotor des Kraftfahrzeuges, wie bspw. ein Verbrennungsmotor, in Betrieb ist, so dass sich auf der Eingangsseite der Reibkupplung eine bestimmte Drehzahl (bspw. eine Leerlaufdrehzahl oder auch eine andere Drehzahl) einstellt.

Generell ist es bevorzugt, wenn das erfindungsgemäße Verfahren zum Einstellen des Einrückpunktes für unterschiedliche Arbeitspunkte eines solchen Antriebsmotors durchgeführt wird, also bspw. bei unterschiedlichen Drehzahlen auf der Eingangsseite der Reibkupplung. Hierbei kann der Einrückpunkt der Kupplung dann folglich in Abhängigkeit von dem jeweiligen Arbeitspunkt eingestellt werden. Insbesondere ist es möglich, den Einrückpunkt für unterschiedliche Differenzdrehzahlen einzustellen, die über der Reibkupplung anliegen. Bei Verwendung der elektrischen Maschine zum Herstellen des Übergangszustandes (Einstellen auf einen Übergangs-Arbeitspunkt) können solche unterschiedlichen Differenzdrehzahlen auf vergleichsweise einfache Weise und gezielt eingestellt werden. Es ist hierbei nicht notwendig, sich wie im Stand der Technik darauf zu verlassen, dass sich derartige Differenzdrehzahlen irgendwann im normalen Betrieb des Kraftfahrzeugs einstellen (und dass in diesem Fall dann auch hinreichend Zeit zur Durchführung des Einstellverfahrens vorhanden ist).

Gemäß einer insgesamt bevorzugten Ausführungsform wird vor der Einstellung des Einrückpunktes eine Referenzmessung durchgeführt, um das durch Reibungsverluste (beispielsweise von Lagern im Getriebe etc.) und durch das Schleppmoment der Kupplung auftretende Verhalten zu ermitteln und bei späteren Einstellungen des Einrückpunktes zu berücksichtigen.

Das Schleppmoment kann sich beispielsweise aus einem Kupplungsschleppmoment, und einem Verlustmoment im Getriebe und einem Schleppmoment der elektrischen Maschine (Maschinenschleppmoment) zusammensetzen.

Die Genauigkeit der Einstellung des Einrückpunktes kann hierdurch verbessert werden. Mit anderen Worten kann die Adaption des Einrückpunktes unabhängig von dem herrschenden Schleppmoment eingestellt werden.

Von besonderem Vorteil ist es dabei, wenn bei der Referenzmessung das gleiche Verfahren wie beim Einstellen des Einrückpunktes durchgeführt wird, während die Reibkupplung jedoch geöffnet ist.

Mit anderen Worten kann die Referenzmessung auf die gleiche Art und Weise durchgeführt werden wie das erfindungsgemäße Verfahren, bei dem der Kupplungsaktuator auf einen Übergangswert eingestellt wird. Bei der Referenzmessung bleibt die Reibkupplung jedoch geöffnet, um auf diese Weise das Verhalten des Stufengetriebes zu beobachten und bei der anschließenden Einstellung des Einrückpunktes gemäß dem erfindungsgemäßen Verfahren berücksichtigen zu können.

Ferner ist es bei der Ausführungsform unter Verwendung einer Schaltkupplung bevorzugt, wenn das Öffnen der Schaltkupplung bei dem erfindungsgemäßen Verfahren aus dem Übergangszustand heraus erfolgt, nachdem der Übergangswert des Kupplungsaktuators einen Wert innerhalb eines Sollbereiches erreicht hat.

Auf diese Weise kann gewährleistet werden, dass das Öffnen der Schaltkupplung aus dem Übergangszustand heraus erst dann erfolgt, wenn an der Reibkupplung ein vorgegebener Zustand erreicht ist.

Gemäß einer weiteren insgesamt bevorzugten Ausführungsform ist der Drehzahlgradientwert, in dessen Abhängigkeit der Sollwert des Kupplungsaktuators für den Einrückpunkt eingestellt wird, der Drehzahlgradientwert der Eingangswelle des Getriebes.

Bei automatisierten Schaltgetrieben ist generell ein Sensor vorhanden, der diese Eingangsdrehzahl misst. Daher ist kein zusätzlicher Hardware-Aufwand notwendig, um das erfindungsgemäße Verfahren zu implementieren.

Bei einem Doppelkupplungsgetriebe versteht sich, dass jeweils die Eingangswelle des zugeordneten (freien) Teilgetriebes hinsichtlich der Drehzahl überwacht wird, um den Drehzahlgradientwert zu ermitteln.

Ferner ist in diesem Zusammenhang anzumerken, dass dann, wenn im Rahmen der vorliegenden Anmeldung von einer Drehzahl oder einem Drehzahlgradienten einer bestimmten Welle die Rede ist, damit in gleicher Weise die Drehzahl bzw. der Drehzahlgradient jeder anderen Welle gemeint sein kann, deren Drehzahl proportional hierzu ist (also beispielsweise eine form- oder kraftschlüssige Verbindung, wie über einen Radsatz oder eine geschlossene Kupplung).

Da die elektrische Maschine vorzugsweise fest mit der Eingangswelle des Getriebes oder einer konstant hiermit verbundenen Welle verbunden ist, ist in der Regel auch die Drehzahl der elektrischen Maschine proportional zu der Drehzahl der Eingangswelle des Getriebes. Die Ermittlung des Drehzahlgradientwertes kann bei dem Verfahren, bei dem die Schaltkupplung verwendet wird, in einer Art und Weise erfolgen, wie sie ausführlich in der WO 2009/065591 beschrieben ist. Deren Offenbarungsgehalt soll demzufolge vorliegend durch Bezugnahme enthalten sein.

Gemäß einer bevorzugten Ausführungsform wird der Übergangszustand hergestellt, indem ein Prozess zum Einstellen des Kupplungsaktuators auf einen Übergangswert und ein Prozess zum Einstellen des Schaltaktuators auf einen Übergangswert zumindest abschnittsweise parallel durchgeführt werden.

In ähnlicher Weise wie oben sind bevorzugte Ausführungsformen zum abschnittsweise parallelen Durchführen dieser Prozesse in der WO 2009/065591 beschrieben, auf deren Offenbarungsgehalt vorliegend Bezug genommen wird.

Insgesamt lässt sich mit der vorliegenden Erfindung je nach Ausprägung wenigstens einer der folgenden Vorteile erzielen:

- Es ergibt sich eine zeitlich schnelle Abarbeitung des Verfahrens zum Einstellen des Einrückpunktes bzw. zur Kennlinienadaption.

- Die Art der Drehzahlgradientenmessung ist unabhängig von der Start-Differenzdrehzahl, da die Effekte der $\mu$V-Kurve (Reibbeiwert über der Differenzdrehzahl) nicht mit eingehen, insbesondere, wenn als Drehzahlgradientwert ein gefilterter Wert herangezogen wird.

- Die Art der Drehzahlgradientenmessung setzt keine quasi-stationären Bedingungen voraus.

- Es ist eine Kupplungsstellsignal-Überwachung möglich. Beispielsweise kann während des Übergangszustandes der Kupplungs-Ist-Druck überwacht werden. Bei einer zu großen Abweichung vom Solldruck kann das Verfahren beispielsweise abgebrochen werden.

- Bei Durchführung einer Referenzmessung bei offener Kupplung kann das auf das freie Teilgetriebe wirkende Schleppmoment berücksichtigt werden, das sich beispielsweise aus einem Kupplungsschleppmoment, einem Verlustmoment des Stufengetriebes und einem Maschinenschleppmoment ergibt.

- Eine möglichst parallele Abarbeitung der Ansteuerung des Kupplungsaktuators und des Schaltaktuators wird durch die Hard- und Software ermöglicht.

- Es ergibt sich über die Betriebslebensdauer eine gute Schaltqualität und ein guter Anfahrvorgang (Sicherheitskriterium).

- Das erfindungsgemäße Verfahren kann so oft wie möglich erfolgen (immer dann, wenn die notwendigen Randbedingungen erfüllt sind), kann aber auch nur zu bestimmten Zeitpunkten (beispielsweise frühestens alle 30 Sekunden oder auch ein deutlich längerer Wert, wie beispielsweise jeden Tag) durchgeführt werden, oder ausschließlich bei Wartungsarbeiten.

- Wenn die elektrische Maschine auf einen Übergangs-Arbeitspunkt eingestellt wird und Schaltkupplungen des zugeordneten Stufengetriebes hierbei geöffnet bleiben, kann das erfindungsgemäße Verfahren unabhängig von den sonstigen Randbedingungen für verschiedene Arbeitspunkte (bspw. Differenzdrehzahlen über der Reibkupplung) durchgeführt werden.

- Generell ist es auch möglich, das Fahrverhalten zu überwachen und in Abhängigkeit hiervon das erfindungsgemäße Verfahren durchzuführen.

- Das Verfahren lässt sich auch umkehren, indem durch das erfindungsgemäße Verfahren der Kupplungsdrucksensor überprüft wird, und zwar unter der Annahme, dass der Einrückpunkt der Reibkupplung korrekt eingestellt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine schematische Darstellung eines Doppelkupplungsgetriebes für ein Kraftfahrzeug;

Fig. 2     Diagramme eines Reibkupplungsstellwertes und eines Schaltkupp- lungsstellwertes und von Drehzahlen zur Erläuterung eines nicht erfindungsgemäßen Verfahrens;

Fig. 3     eine der Fig. 2 vergleichbare Darstellung einer alternativen Ausfüh- rungsform eines nicht erfindungsgemäßen Verfahrens;

Fig. 4     eine der Fig. 2 vergleichbare Darstellung zur Erläuterung einer wei- teren Ausführungsform eines nicht erfindungsgemäßen Verfahrens;

Fig. 5     Diagramme eines Reibkupplungsstellwertes, eines Momentenwertes der elektrischen Maschine und einer Drehzahl der elektrischen Ma- schine über der Zeit zur Erläuterung von erfindungsgemäßen Ver- fahren;

Fig. 6     Diagramme eines Reibkupplungsstellwertes und eines Schaltkupp- lungsstellwertes sowie von Drehzahlen zur Erläuterung eines weite- ren erfindungsgemäßen Verfahrens; und

Fig. 7     Diagramme eines Reibkupplungsstellwertes, eines Momentenwertes einer elektrischen Maschine und von Drehzahlen zur Erläuterung von weiteren Ausführungsformen von erfindungsgemäßen Verfah- ren.

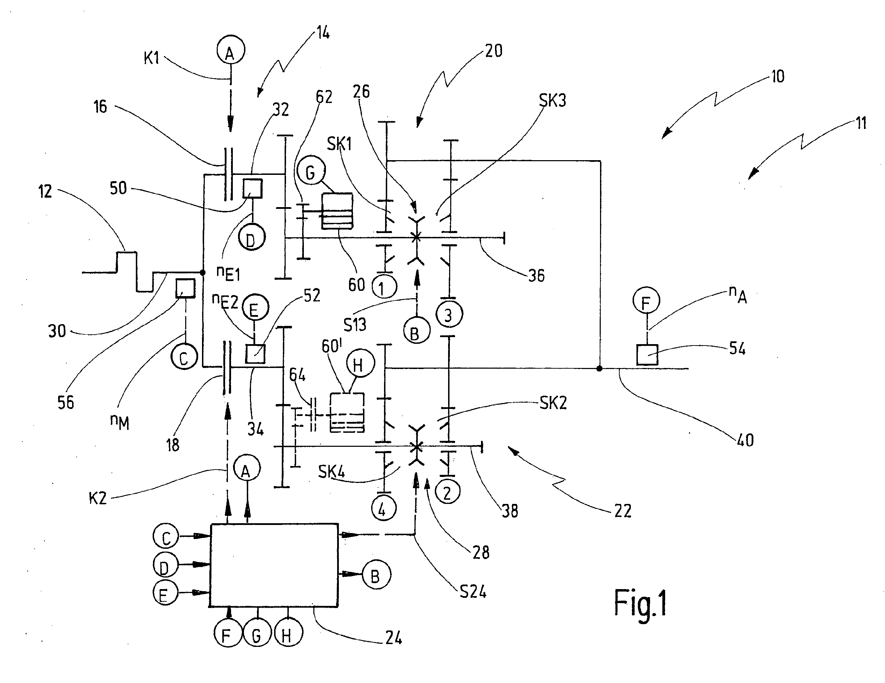

Fig. 1 zeigt in schematischer Form einen Antriebsstrang eines Kraftfahrzeuges 11, wobei der Antriebsstrang einen Antriebsmotor 12, wie einen Verbrennungsmotor (oder auch einen Elektromotor oder eine Hybrid-Antriebseinheit), und ein Doppelkupplungsgetriebe 10 aufweist.
Das Doppelkupplungsgetriebe 10 beinhaltet eine Doppelkupplungsanordnung 14 mit einer ersten Reibkupplung 16 und einer zweiten Reibkupplung 18.
Ferner weist das Doppelkupplungsgetriebe 10 ein erstes Teilgetriebe 20 und ein zweites Teilgetriebe 22 auf. Die erste Reibkupplung 16 und das erste Teilgetriebe 20 bilden einen ersten Zweig, die zweite Reibkupplung 18 und das zweite Teilgetriebe 22 einen zweiten Zweig des Doppelkupplungsgetriebes 10.
Ferner beinhaltet das Doppelkupplungsgetriebe 10 eine Steuereinrichtung 24, die dazu ausgelegt ist, das Doppelkupplungsgetriebe 10 (und gegebenenfalls andere Komponenten des Antriebsstranges) automatisiert anzusteuern.
Das Doppelkupplungsgetriebe 10 weist eine Mehrzahl von Gangstufen auf, wobei die ungeraden Gangstufen dem ersten Teilgetriebe 20 und die geraden Gangstufen dem zweiten Teilgetriebe 22 zugeordnet sind. Das Doppelkupplungsgetriebe 10 kann fünf, sechs, sieben oder mehr Gangstufen besitzen. Aus Gründen einer übersichtlicheren Darstellung ist das Doppelkupplungsgetriebe 10 in Fig. 1 lediglich mit vier Gangstufen dargestellt. Die Gangstufen 1 und 3 werden von einem Schaltkupplungspaket 26 betätigt, das eine erste Schaltkupplung SK1 und eine zweite Schaltkupplung SK3 aufweist. Die Gangstufen 2 und vier werden von einem zweiten Schaltkupplungspaket 28 betätigt, das wiederum eine erste Schaltkupplung SK2 und eine zweite Schaltkupplung SK4 aufweist.
Die Schaltkupplungen SK sind jeweils als Synchron-Schaltkupplungen ausgebildet. Alternativ ist es auch denkbar, die Schaltkupplungen als einfache Klauenkupplungen auszubilden, in welchem Fall jedoch zusätzliche Mittel zur Synchronisierung vorgesehen sein müssen, wie beispielsweise eine separate Bremse oder Ähnliches, die die entsprechende Synchronisierungsfunktion ausüben kann.
Die Eingangsglieder der Reibkupplungen 16, 18 sind gemeinsam mit einer Motorabtriebswelle 30 des Antriebsmotors 12 verbunden.
Das Ausgangsglied der Reibkupplung 16 ist mit einer ersten Getriebeeingangswelle 32 des ersten Teilgetriebes 20 verbunden. Das Ausgangsglied der Reibkupplung 18 ist mit einer zweiten Getriebeeingangswelle 34 des zweiten Teilgetriebes 22 verbunden.
Das erste Teilgetriebe 20 weist eine Vorgelegewelle 36 auf. Das zweite Teilgetriebe 22 weist eine zweite Vorgelegewelle 38 auf.
Ausgangsseitig sind die Teilgetriebe 20, 22 mit einer gemeinsamen Getriebeausgangswelle 40 verbunden, die beispielsweise mit einer Kardanwelle oder einem Eingangsglied eines Querdifferentials verbunden sein kann.
Das dargestellte Layout des Doppelkupplungsgetriebes 10 sowie die dargestellte Sensorik und Aktorik sind lediglich beispielhaft als Grundlage für die Beschreibung der Erfindung zu verstehen. Die nachfolgend erläuterte Erfindung lässt sich dabei sowohl auf Antriebsstränge für den Längs- oder Quereinbau anwenden, sowie auch auf andere Arten von Getrieben, die eingangsseitig eine Reibkupplung aufweisen, die als Anfahr- und/oder Trennkupplung dient, sowie ein einer Schaltkupplung vergleichbares Element.

Die Steuereinrichtung 24 ist mit einem schematisch angedeuteten Kupplungsaktuator K1 zur Betätigung der ersten Reibkupplung 16 sowie mit einem zweiten Kupplungsaktuator K2 zur Betätigung der zweiten Reibkupplung 18 verbunden. Ferner ist die Steuereinrichtung 24 mit einem ersten Schaltaktuator S13 zur Betätigung des Schaltkupplungspaketes 26 sowie mit einem zweiten Schaltaktuator S24 zur Betätigung des zweiten Schaltkupplungspaketes 28 verbunden. Ein Sensor 50 erfasst die Drehzahl nE1 der ersten Getriebeeingangswelle. Ein Sensor 52 erfasst die Drehzahl nE2 der zweiten Getriebeeingangswelle 34. Ein Sensor 54 erfasst die Drehzahl nA der Getriebeausgangswelle 40. Ein Sensor 56 erfasst die Drehzahl nM der Motorabtriebswelle 30.

Die von dem Antriebsmotor 12 erzeugte Antriebsleistung wird alternativ entweder über die erste Reibkupplung 16 und das erste Teilgetriebe 20 auf die Getriebeausgangswelle 40 oder über die zweite Reibkupplung 18 und das zweite Teilgetriebe 22 auf die Getriebeausgangswelle 40 übertragen. Bei Übertragung von Antriebsleistung über eines der Teilgetriebe (beispielsweise über die Gangstufe 3 im Teilgetriebe 20) ist die Reibkupplung 18 des anderen Zweigs geöffnet, so dass eine benachbarte Gangstufe in dem parallelen (freien) Teilgetriebe 22 bereits eingelegt werden kann. Im Zugbetrieb wird beispielsweise die nächsthöhere Gangstufe eingelegt, im Schubbetrieb beispielsweise die nächstniedrigere Gangstufe. Ein Gangwechsel erfolgt dann, indem die zwei Reibkupplungen 16, 18 derart überschneidend betätigt werden, so dass der Gangwechsel unter Last erfolgen kann.

Der Antriebsstrang des Kraftfahrzeuges ist in der in Fig. 1 dargestellten Ausführungsform als Hybrid-Antriebsstrang ausgebildet. Hierbei ist dem ersten Teilgetriebe 20 eine elektrische Maschine 60 zugeordnet. Genauer gesagt ist die elektrische Maschine 60 fest mit der Vorgelegewelle 36 verbunden, und zwar über einen Stirnradsatz 62. Mit anderen Worten weist eine nicht näher bezeichnete Rotorwelle der elektrischen Maschine 60 eine Drehzahl auf, die proportional ist zu der Drehzahl der Getriebeeingangswelle 32 des ersten Teilgetriebes 20.

Die elektrische Maschine 60 wird aus einem nicht näher dargestellten Energiespeicher (bspw. einer Batterie) gespeist und von der Steuereinrichtung 24 angesteuert. Zu diesem Zweck kann eine entsprechende Leistungselektronik entweder in der Steuereinrichtung 24 oder zugeordnet zu der elektrischen Maschine 60 vorgesehen sein.

Die elektrische Maschine ist in dem dargestellten Ausführungsbeispiel dem Teilgetriebe 20 mit den ungeraden Gangstufen zugeordnet. Demzufolge lässt sich bspw. ein Anfahren des Kraftfahrzeuges rein elektrisch über die Gangstufe eins durchführen. Ferner kann bspw. bei einem Fahrbetrieb über das zweite Teilgetriebe 22 eine Rekuperation erfolgen, indem eine der Schaltkupplungen des ersten Teilgetriebes 20 geschlossen wird und die erste Reibkupplung 16 geöffnet bleibt.

Das Doppelkupplungsgetriebe kann mit nur einer derartigen elektrischen Maschine 60 in einem der Teilgetriebe 20, 22 ausgestattet sein. Alternativ ist es möglich, beiden Teilgetrieben 20, 22 eine elektrische Maschine zuzuordnen, wie es in Fig. 1 gestrichelt bei 60' gezeigt ist. Die elektrische Maschine 60' ist dabei entweder ebenfalls fest mit der zugeordneten Vorgelegewelle 38 (oder der Getriebeeingangswelle 34) verbunden. Die elektrische Maschine 60' und/oder die elektrische Maschine 60 können jedoch auch über Trennkupplungen mit den jeweiligen Wellen verbunden sein, wie es in Fig. 1 schematisch bei 64 gezeigt ist.

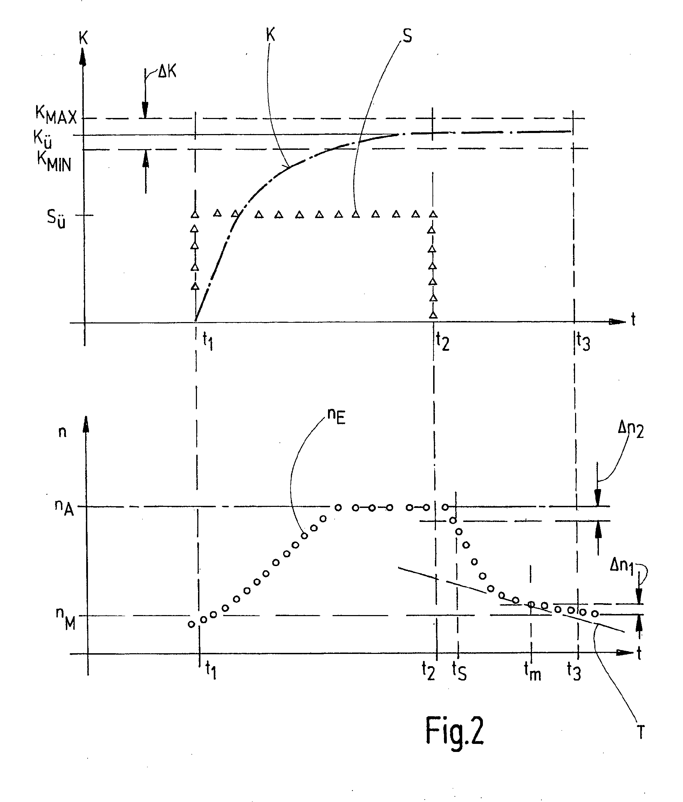

Zum Einstellen des Einrückpunktes der Reibkupplungen 16, 18 werden nachstehend zunächst anhand der Figuren 2 bis 4 Verfahren erläutert, die auf das in Fig. 1 gezeigte Doppelkupplungsgetriebe anwendbar sind, auch wenn keinem der Teilgetriebe 20, 22 eine elektrische Maschine zugeordnet ist.

Das Einstellen des Einrückpunktes erfolgt dabei jeweils an der Reibkupplung, über die gerade keine Antriebsleistung übertragen wird, so dass das Verfahren auch während der Fahrt ausgeführt werden kann.

Fig. 2 zeigt in schematischer Form die wesentlichen Abläufe der Ansteuerung des Kupplungsaktuators K und eines hierbei verwendeten Schaltaktuators S sowie den sich hieraus ergebenden Drehzahlverlauf nE der zugeordneten Getriebeeingangswelle.

Zum Einleiten des Verfahrens zum Einstellen des Einrückpunktes der Reibkupplung (beispielsweise der Reibkupplung 16) werden der Kupplungsaktuator K und der Schaltaktuator S bei t1 etwa gleichzeitig bzw. parallel zueinander betätigt und auf einen Übergangswert eingestellt. Die Leistungsübertragung des Antriebsstranges erfolgt dabei über den anderen Zweig, so dass die Getriebeabtriebswelle 40 eine bestimmte Drehzahl nA besitzt, wie es in Fig. 2 dargestellt ist. Ferner läuft der Antriebsmotor 12 in der vereinfachten Darstellung der Fig. 2 mit einer konstanten Drehzahl nM.

Sofern hierbei beispielsweise im leistungsübertragenden Teilgetriebe 22 die zweite Gangstufe eingelegt ist, wird im freien Teilgetriebe eine benachbarte Gangstufe, beispielsweise die Gangstufe 1 eingelegt. Durch das Schalten der zugeordneten Schaltkupplung SK1 mit dem Schaltaktuator S13 erhöht sich demzufolge die Drehzahl nE der freien Getriebeeingangswelle (in dem gewählten Beispiel die Getriebeeingangswelle 32). Die Drehzahl wird dabei auf eine Drehzahl erhöht, die sich aus der Getriebeabtriebswellendrehzahl nA und der Übersetzung der Gangstufe, in diesem Fall die Übersetzung des ersten Ganges, ergibt. In diesem Zusammenhang versteht sich, dass die Darstellungen der Drehzahlen in Fig. 2 und den nachfolgenden Figuren jeweils normiert sind, also etwaige Übersetzungen oder Ähnliches herausgerechnet sind.

Der Übergangswert des Schaltaktuators S13 zur Betätigung der Schaltkupplung SK1 ist in Fig. 2 mit SÜ gekennzeichnet. Dies kann einem Sollwert entsprechend einem vollständigen Einlegen der zugeordneten Gangstufe entsprechen, oder aber einem definierten Wert, um die Schaltkupplung SK1 in einen schlupfenden Zustand zu versetzen (Ansynchronisieren).

Parallel hierzu wird, wie gesagt, der Kupplungsaktuator K betätigt und auf einen Übergangswert KÜ angesteuert. Der Übergangswert KÜ entspricht dabei einem Wert, bei dem die zugeordnete Reibkupplung 16 nur ein sehr kleines Drehmoment übertragen kann (beispielsweise < 20 Nm). Der Übergangswert KÜ kann beispielsweise der Sollwert des Kupplungsaktuators K für den Einrückpunkt der zugeordneten Reibkupplung 16 sein.

Sofern der Übergangswert des Kupplungsaktuators K erreicht ist (oder eine bestimmte Zeit hiernach), wird die zugeordnete Schaltkupplung wieder geöffnet, und zwar zum Zeitpunkt t2. Da die zugeordnete Reibkupplung ein gewisses Drehmoment überträgt, gleicht sich die Drehzahl nE der zugeordneten Getriebeeingangswelle 32 der Drehzahl nM des Antriebsmotors 12 an (bei t3). Unmittelbar bevor dieser Zustand erreicht ist (zum Zeitpunkt tm), wird der dann vorliegende Drehzahlgradientwert ermittelt. Der zugeordnete Wert ist in Fig. 2 durch eine Tangente T angedeutet.

Wie erläutert, wird der Drehzahlgradientwert zu einem Zeitpunkt tm ermittelt. Der Zeitpunkt tm entspricht einem Zustand, bei dem die Drehzahl nE sich bis auf eine erste Differenzdrehzahl $\Delta$n1 an die Drehzahl nM angenähert hat. Der Drehzahlgradient kann folglich der Wert des Drehzahlgradienten zum Zeitpunkt tm sein.

Bevorzugt wird der Drehzahlgradientwert jedoch im Wege einer Filterung ermittelt.

In Fig. 2 ist dargestellt, dass ab einem Zeitpunkt ts der Drehzahlgradient ständig ermittelt wird (z.B. alle 5 bis 25 ms). Der Zeitpunkt ts entspricht dabei einem Zeitpunkt, bei dem die Drehzahl nE sich gegenüber der Drehzahl nA um eine zweite Differenzdrehzahl $\Delta$n2 verringert hat. Der Wert von $\Delta$n1 kann im Bereich von 50 bis 200 U/min liegen, vorzugsweise bei etwa 100 U/min. Der Wert von $\Delta$n2 kann in der gleichen Größenordnung liegen.

Die Mehrzahl von Messwerten des Drehzahlgradienten zwischen ts und tm wird gefiltert, indem jüngere Messwerte stärker gewichtet werden als ältere Messwerte. Dabei kann die Filterung gemäß folgender Rekursionsformel erfolgen:

$$DG_{n+1}(\text{gefiltert}) = DG_{n+1}(\text{ungefiltert}) * K1 + DG_n(\text{gefiltert}) * K2,$$

wobei $DG_n$ der n-te Messwert des Drehzahlgradienten ist und wobei K1 und K2 Konstanten sind, für die gilt: K1>K2. Ferner gilt vorzugsweise K1+K2=1. K1 kann bspw. im Bereich von 0,6 bis 0,95 liegt, besonders bevorzugt im Bereich von 0,7 bis 0,9.

Der Drehzahlgradientwert ist der letzte gefilterte Messwert des Drehzahlgradienten zum Zeitpunkt tm.

Der Steigungswert (Drehzahlgradientwert) der Tangente T ist ein Maß dafür, welches Drehmoment die zugeordnete Reibkupplung 16 aufgrund des Übergangswertes KÜ überträgt. Demzufolge kann in einem nachfolgenden Verfahrensschritt der Sollwert des Kupplungsaktuators K für den Einrückpunkt der zugeordneten Reibkupplung 16 auf der Grundlage dieses Drehzahlgradientwertes eingestellt bzw. adaptiert werden.

Folglich wird im Rahmen des Verfahrens zum Einstellen des Einrückpunktes der zugeordneten Reibkupplung ein Übergangszustand hergestellt, in dem der Kupplungsaktuator K und der Schaltaktuator S im Wesentlichen gleichzeitig (zum Zeitpunkt t1) auf einen jeweiligen Übergangswert KÜ bzw. SÜ eingestellt werden. Ausgehend von diesem Übergangszustand wird anschließend die zugeordnete Schaltkupplung SK geöffnet (zum Zeitpunkt t2), so dass sich ein Drehzahlgradientwert ergibt, anhand dessen der Sollwert des Kupplungsaktuators K für den Einrückpunkt der zugeordneten Reibkupplung 16 eingestellt bzw. adaptiert wird. Dieses Verfahren wird auch als Kisspointadaption bezeichnet.

Wie es in Fig. 2 ferner dargestellt ist, erfolgt in Bezug auf die Stellgröße des Kupplungsaktuators K eine Bereichsüberwachung. Das Öffnen der zugeordneten Schaltkupplung zum Zeitpunkt t2 erfolgt frühestens, wenn der Stellwert des Kupplungsaktuators K in einem Bereich zwischen Kmin und Kmax liegt. Der zugeordnete Bereich ist in Fig. 2 mit $\Delta$K bezeichnet.

Generell versteht sich, dass das beschriebene Verfahren auch angewendet werden kann, indem in dem freien Zweig nicht die nächstniedrige Gangstufe (wie im obigen Beispiel die Gangstufe 1) gewählt wird, sondern die nächsthöhere Gangstufe. Generell ist es natürlich auch denkbar, andere Gangstufen als die Gangstufen heranzuziehen, die benachbart zu der momentan zur Leistungsübertragung verwendeten Gangstufe im hierzu parallelen Teilgetriebe sind.

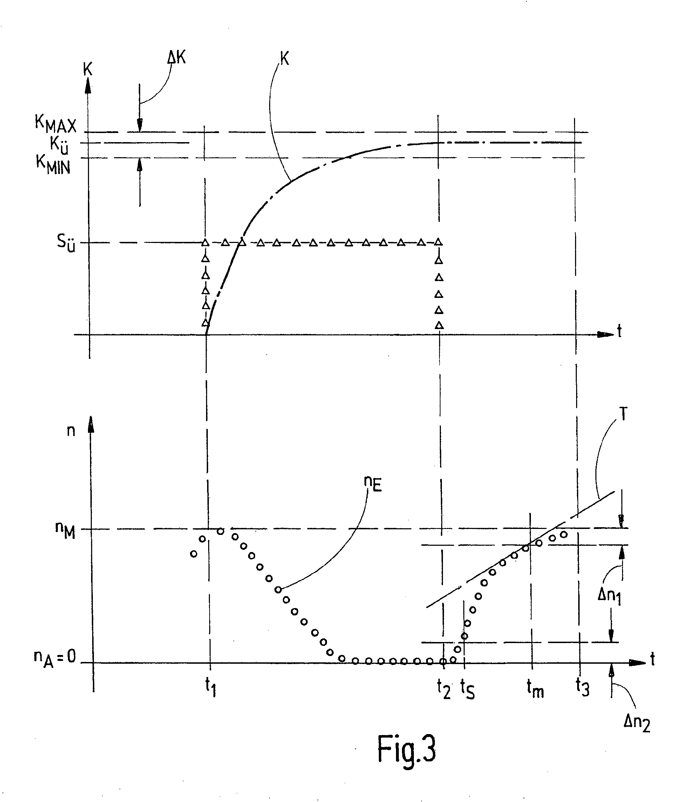

In Fig. 3 ist eine alternative Ausführungsform des Verfahrens dargestellt. Das Verfahren entspricht in sämtlichen Aspekten dem Verfahren, das anhand der Fig. 2 beschrieben worden ist. Der einzige Unterschied besteht darin, dass das Verfahren im Stillstand des Fahrzeugs 11 erfolgt (nA = 0). Demzufolge wird die Drehzahl nE der zugeordneten Getriebeeingangswelle in dem Übergangszustand auf Null verringert, wobei die Drehzahl nE nach dem Öffnen der Schaltkupplung zum Zeitpunkt t2 auf den Wert der Motordrehzahl nM hochläuft.

Das Verfahren der Fig. 3 kann beispielsweise zum Einlernen der Steuerung 24 zum erstmaligen Einstellen des Einrückpunktes der jeweiligen Reibkupplung auch mehrfach angewendet werden, wobei der Sollwert des Kupplungsaktuators K für den Einrückpunkt dann iterativ auf den richtigen Wert eingestellt wird.

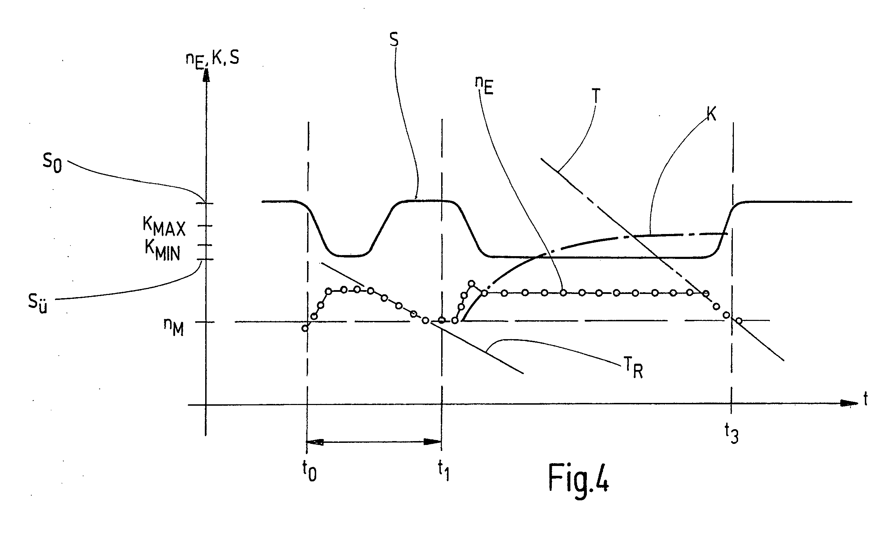

In Fig. 4 ist eine weitere alternative Ausführungsform des Verfahrens dargestellt.

Das Verfahren entspricht in den Zeitpunkten t1 bis t3 generell dem Verfahren, das in Fig. 2 dargestellt wurde.

Bei dem Verfahren der Fig. 4 wird dem erfindungsgemäßen Verfahren ein Referenzmessverfahren vorgeschaltet, das dem nachgeschalteten Messverfahren generell ähnelt (vom Zeitpunkt t0 bis t1). In diesem Referenzmessverfahren wird der Schaltaktuator S vorab auf den Übergangswert SÜ eingestellt, die Reibkupplung jedoch nicht betätigt, und es wird ansonsten in der gleichen Weise ein Drehzahlgradientwert erfasst, der durch die Steigung einer Tangente TR repräsentiert ist. Durch diese Referenzmessung kann das auf das Teilgetriebe wirkende Schleppmoment, das beispielsweise aus einem Kupplungsschleppmoment und einem Verlustmoment der zugeordneten Welle resultiert, bei der anschließenden Berechnung des Sollwertes des Kupplungsaktuators für den Einrückpunkt der Reibkupplung berücksichtigt werden.

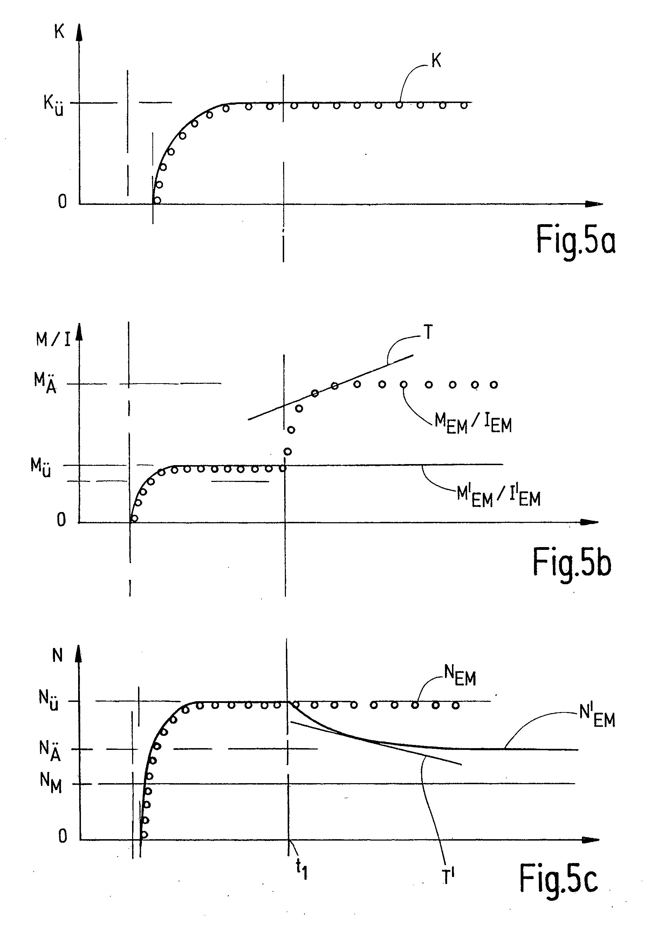

Während in den obigen Figuren 2 bis 4 Verfahren gezeigt sind, bei denen der Einrückpunkt der Reibkupplung ohne Verwendung einer elektrischen Maschine durchgeführt werden kann, sind in den nachfolgenden Figuren 5 bis 7 erfindungsgemäße Verfahren dargestellt, bei denen eine Beeinflussung des Stufengetriebes durch eine elektrische Maschine bei der Einstellung des Einrückpunktes der Reibkupplung berücksichtigt wird. Diese Verfahren entsprechen hinsichtlich ihres generellen Ablaufes den oben beschriebenen Verfahren. Gleiche Variablen oder Parameter sind daher mit gleichen Bezugszeichen gekennzeichnet. Im Folgenden werden im Wesentlichen die Unterschiede erläutert.

Fig. 5 zeigt in schematischer Form die Abläufe bei der Einstellung eines Einrückpunktes einer Reibkupplung bei aktiver Verwendung einer mit dem Stufengetriebe verbundenen elektrischen Maschine. Fig. 5a zeigt dabei den Kupplungsweg K über der Zeit. Fig. 5b zeigt das von der elektrischen Maschine ausgeübte Moment M über der Zeit, das proportional ist zu dem durch die elektrische Maschine fließenden Strom I. Fig. 5c zeigt Drehzahlen über der Zeit, und zwar zum einen die Drehzahl $N_M$ eines Antriebsmotors des Antriebsstranges und zum anderen die Drehzahl $N_{EM}$ der elektrischen Maschine.

In Fig. 5 sind dabei zwei alternative Ausführungsformen gezeigt. Die gepunkteten Kurven zeigen eine Ausführungsform, bei der die elektrische Maschine zum Herstellen des Übergangszustandes auf eine Übergangsdrehzahl geregelt wird. Die durchgezogenen Linien zeigen eine Ausführungsform, bei der die elektrische Maschine zur Herstellung des Übergangszustandes auf ein Übergangsdrehmoment geregelt wird.

Bei der erstgenannten Ausführungsform wird in dem Stufengetriebe 10 (das heißt insbesondere in einem freien Teilgetriebe eines Doppelkupplungsgetriebes 10), bei der die zugeordnete Reibkupplung geöffnet ist (K = 0), zunächst die Drehzahl $N_{EM}$ der elektrischen Maschine auf eine Übergangsdrehzahl $N_Ü$ geregelt. Es versteht sich dabei, dass die zugeordneten Schaltkupplungen des Stufengetriebes geöffnet sind, also kein Gang eingelegt ist.

Anschließend wird die Reibkupplung auf einen Übergangswert $K_Ü$ eingestellt, der vorzugsweise dem bisherigen Sollwert für den Einrückpunkt entspricht. Der Übergangswert ist ein Wert, bei dem die Kupplung nur ein relativ geringes Drehmoment übertragen kann, bspw. < 20 Nm.

Sobald der Kupplungsaktuator den Wert von $K_Ü$ erreicht hat (t = $t_1$), wird in das Stufengetriebe 10 von dem Antriebsmotor, der mit einer konstanten Drehzahl $N_M$ dreht, ein Drehmoment in das Stufengetriebe eingeleitet. Da die elektrische Maschine die Drehzahl $N_{EM}$ konstant auf die Übergangsdrehzahl $N_Ü$ regelt, verändert sich das von der elektrischen Maschine ausgeübte Drehmoment $M_{EM}$ (bzw. der hier durchfließende elektrische Strom $I_{EM}$).

Der zeitliche Verlauf des elektrischen Stromes $I_{EM}$ kann auf vergleichsweise einfache Weise gemessen und ausgewertet werden. Wie bei den vorherigen Ausführungsformen wird bspw. Stromwert $M_Ä$ ermittelt, der ein Maß dafür ist, welches Drehmoment die zugeordnete Reibkupplung aufgrund des Übergangswertes $K_Ü$ überträgt, oder ein Gradientwert ermittelt, der in Fig. 5b durch eine Tangente T angedeutet ist. Der Steigungswert (Gradientwert) der Tangente T kann wiederum ein Maß dafür sein, welches Drehmoment die zugeordnete Reibkupplung aufgrund des Übergangswertes $K_Ü$ überträgt. Demzufolge kann in einem nachfolgenden Verfahrensschritt der Sollwert des Kupplungsaktuators K für den Einrückpunkt der zugeordneten Reibkupplung auf der Grundlage dieses Stromwertes $M_Ä$ oder Gradientwertes eingestellt bzw. adaptiert werden. Dieses Verfahren wird auch als Kisspointadaption bezeichnet.

Fig. 5 zeigt eine alternative Ausführungsform, bei der nicht die Drehzahl $N_{EM}$ geregelt wird, sondern vielmehr das von der elektrischen Maschine abgegebene Drehmoment $M'_{EM}$ auf einen konstanten Übergangswert $M_Ü$ geregelt wird. Bei dieser Ausführungsform wird wiederum zum Zeitpunkt $t_1$ die Kupplung auf den Übergangswert $K_Ü$ eingestellt. Zu diesem Zeitpunkt verändert sich die Drehzahl $N'_{EM}$. Ähnlich wie bei den vorherigen Ausführungsformen wird ein Drehzahlgradientwert ermittelt, der in Fig. 5c schematisch durch eine Tangente T' eingezeichnet ist (oder ein Endwert $N_Ä$ der sich einstellenden Drehzahl). Der Endwert und/oder Drehzahlgradientwert ist wiederum ein Maß dafür, welches Drehmoment die Reibkupplung aufgrund des Übergangswertes $K_Ü$ überträgt. Demzufolge kann der Sollwert des Kupplungsaktuators K für den Einrückpunkt der zugeordneten Reibkupplung auf der Grundlage dieses Endwertes/Drehzahlgradientwertes eingestellt bzw. adaptiert werden.

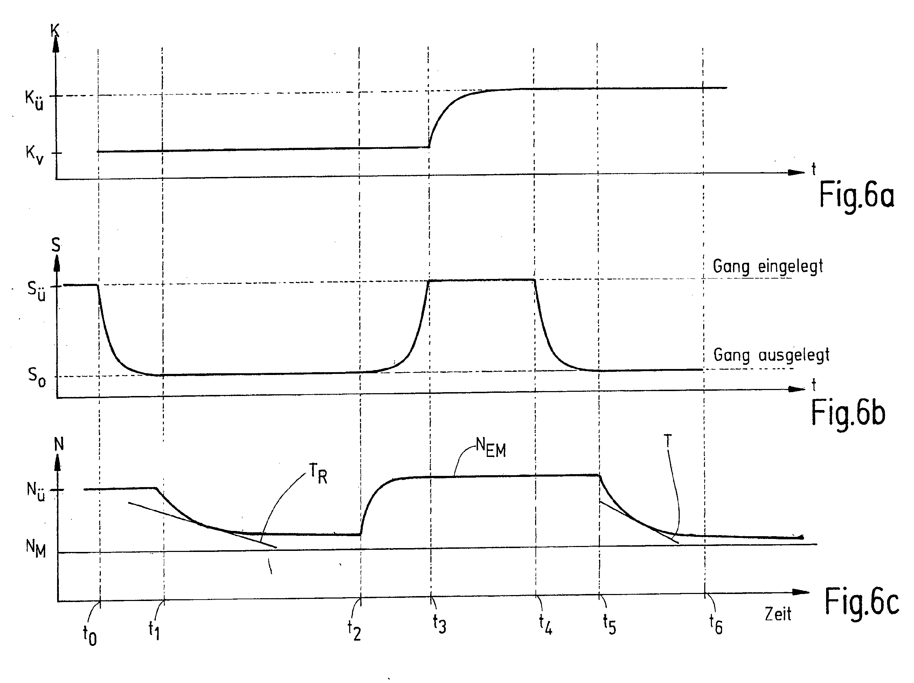

In Fig. 6 ist ein alternatives Verfahren zum Einstellen des Einrückpunktes einer Reibkupplung unter Verwendung einer elektrischen Maschine gezeigt. Fig. 6a zeigt dabei wiederum den Stellweg K eines Kupplungsaktuators über der Zeit. Fig. 6b zeigt den Stellweg S eines Schaltaktuators über der Zeit. Fig. 6c zeigt Drehzahlen über der Zeit, und zwar zum einen die Drehzahl $N_M$ eines Antriebsmotors und zum anderen die Drehzahl $N_{EM}$ der elektrischen Maschine.

In Fig. 6 ist dabei von einem Zeitpunkt $t_3$ bis zu einem Zeitpunkt $t_6$ ein Verfahren zum Einstellen des Einrückpunktes einer Reibkupplung gezeigt, dessen Ablauf im Wesentlichen der Fig. 2 entspricht. In einem Zeitfenster von $t_0$ bis $t_2$ ist ein dem eigentlichen Einstellverfahren vorgeschaltetes Referenzmessverfahren gezeigt, dessen Ablauf im Wesentlichen dem Referenzverfahren der Fig. 4 entspricht.

Vor dem Zeitpunkt $t_0$ befindet sich der Kupplungsaktuator der Reibkupplung auf einem Werk $K_v$, bei dem von der Reibkupplung kein Drehmoment übertragen wird, die Reibkupplung sich jedoch relativ kurz vor dem Einrückpunkt befindet. Ferner ist in dem zugeordneten Teilgetriebe des Doppelkupplungsgetriebes 10 eine Gangstufe eingelegt (S = $S_{Ü}$). Der Antriebsmotor läuft angenommenerweise mit einer konstanten Drehzahl $N_M$. Durch die eingelegte Gangstufe (S = $S_{Ü}$) stellt sich die Drehzahl $N_{EM}$ der elektrischen Maschine auf einen Übergangswert $N_{Ü}$ ein. Anschließend wird bei t = $t_0$, ohne die Reibkupplung zu schließen, die Schaltkupplung geöffnet (S = $S_o$). Zu einem Zeitpunkt $t_1$ überträgt die Schaltkupplung folglich kein Moment mehr von der Getriebeausgangswelle auf das Stufengetriebe, so dass die Drehzahl $N_{EM}$ der elektrischen Maschine abfällt. Aus diesem Verlauf wird wiederum ein Drehzahlgradientwert errechnet, der in Fig. 6c schematisch bei $T_R$ eingezeichnet ist. Dieser Drehzahlgradientwert ist ein Maß für die in dem Stufengetriebe vorhandenen Schleppmomente, einschließlich eines Kupplungsschleppmomentes, Schleppmomenten aufgrund Reibung in dem Getriebe, sowie einschließlich eines Maschinenschleppmomentes der elektrischen Maschine.

Die elektrische Maschine wird bei dieser Ausführungsform nicht auf eine Drehzahl geregelt, sondern wird als Last an das Stufengetriebe angekoppelt. Dabei kann die elektrische Maschine für die gesamte Dauer des Einstellverfahrens entweder im Leerlauf betrieben werden oder im Kurzschluss betrieben werden.

Ab dem Zeitpunkt $t_2$ findet das eigentliche Einstellverfahren statt. Hierbei wird zunächst die Schaltkupplung wieder auf den Übergangswert geschaltet, so dass eine Gangstufe eingelegt wird (S = $S_{Ü}$ bei $t_2$). Hierdurch erhöht sich erneut die Drehzahl $N_{EM}$ der elektrischen Maschine auf den Übergangswert $N_{Ü}$. Anschließend (oder im Wesentlichen parallel hierzu) wird zum Zeitpunkt $t_3$ der Kupplungsaktuator in Richtung des Übergangswertes $K_{Ü}$ bewegt. Sobald sich der Kupplungsaktuator K auf dem Werkt $K_{Ü}$ befindet, wird erneut der Schaltaktuator betrieben, um die zugeordnete Schaltkupplung zu öffnen (S = $S_o$). Sobald dies der Fall ist (etwa zum Zeitpunkt $t_5$), fällt die Drehzahl $N_{EM}$ der elektrischen Maschine wiederum ab. Ein hierbei ermittelter Drehzahlgradient ist wiederum durch eine Tangente T repräsentiert. Da bei dem Einstellverfahren die Reibkupplung ein gewisses Moment überträgt und der Antriebsmotor auf der Drehzahl $N_M$ läuft, ergibt sich ein anderer Drehzahlgradientwert als bei der vorherigen Referenzmessung. Demzufolge können bei dem eigentlichen Verfahren die Schleppmomente herausgerechnet werden. Der Drehzahlgradientwert T bzw. die Differenz zwischen dem Drehzahlgradientwert T und dem Drehzahlgradientwert $T_R$ stellt somit ein Maß für das von der Reibkupplung übertragene Drehmoment dar, das bei Einstellung des Kupplungsaktuators K auf den Übergangswert $K_{Ü}$ übertragen wird. Auf dieser Grundlage kann der Einrückpunkt der Reibkupplung genau eingestellt werden.

Da bei diesem Verfahren im Gegensatz zur Darstellung der Fig. 2 die elektrische Maschine als Last betrieben wird, ergeben sich größere Drehzahlgradientwerte (steilere Tangenten T). Demzufolge kann der Einrückpunkt der Reibkupplung genauer eingestellt werden.

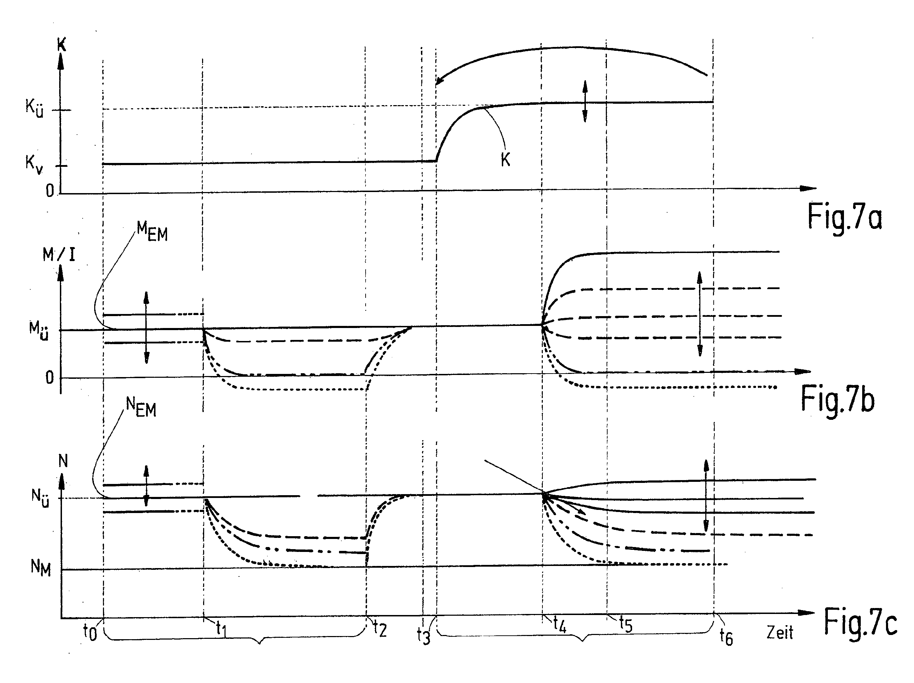

Fig. 7 zeigt weitere Ausführungsformen von erfindungsgemäßen Verfahren zum Einstellen des Einrückpunktes einer Reibkupplung. Fig. 7a zeigt dabei wiederum den Stellweg des Kupplungsaktuators K über der Zeit. Fig. 7b zeigt das von der elektrischen Maschine übertragene Drehmoment M bzw. den hierdurch fließenden elektrischen Strom I über der Zeit. Fig. 7c zeigt Drehzahlen über der Zeit, und zwar die Drehzahl der elektrischen Maschine und die Drehzahl eines Antriebsmotors.

In den Figuren 7b und 7c sind dabei die unterschiedlichen Verfahren zum Einbeziehen der elektrischen Maschine bei dem Einstellen des Einrückpunktes einer Reibkupplung dargestellt. In durchgezogenen Linien ist das Verfahren gezeigt, bei dem die Drehzahl $N_{EM}$ der elektrischen Maschine auf einen konstanten Wert geregelt wird. Mit gestrichelten Linien ist das entsprechende Verfahren gezeigt, bei dem das Drehmoment $M_{EM}$ aus einen konstanten Wert geregelt wird. Mit Strichpunktlinien ist das Verfahren gezeigt, bei dem die elektrische Maschine als Last betrieben wird, und zwar im Leerlauf. Mit gepunkteten Linien ist das Verfahren gezeigt, bei dem die elektrische Maschine als Last betrieben wird, und zwar im Kurzschluss. In Fig. 7 ist wiederum von einem Zeitraum $t_0$ bis $t_2$ ein Referenzmessverfahren gezeigt. Von $t_3$ bis $t_6$ ist das eigentliche Verfahren zur Ermittlung des Einrückpunktes gezeigt.

In dem Referenzverfahren befindet sich die Kupplung wiederum auf dem Werk $K_v$, bei dem kein Drehmoment übertragen wird. Dabei befindet sich die elektrische Maschine in dem Zeitraum von $t_0$ bis $t_1$ in dem Übergangszustand, wobei die Drehzahl $N_{EM}$ auf einer Übergangsdrehzahl $N_{Ü}$ liegt und das Drehmoment $M_{EM}$ einen Übergangswert $M_{Ü}$ aufweist.

Zumindest bei den Ausführungsformen, bei denen die elektrische Maschine nicht allein als Last betrieben wird, sondern auf eine Übergangsdrehzahl $N_{Ü}$ bzw. ein Übergangsdrehmoment $M_{Ü}$ geregelt wird und die Schaltkupplungen des zugeordneten Teilgetriebes geöffnet sind, können dabei unterschiedliche Arbeitspunkte eingestellt werden, wie es durch Pfeile angedeutet ist. So kann bspw. eine Differenzdrehzahl zwischen den Drehzahlen $N_{Ü}$ und $N_M$, die über der Reibkupplung anliegt, variiert werden, um die unterschiedlichen Arbeitspunkte einzustellen. Dies ist im Stand der Technik, bei dem sich die Differenzdrehzahl über der Reibkupplung im Wesentlichen durch die aktuellen Drehzahlen des Antriebsmotors und der Getriebeausgangswelle ergibt, nicht möglich. Folglich kann die Reibkupplung nicht nur für einen Arbeitspunkt eingestellt werden, sondern unmittelbar nacheinander für unterschiedliche Arbeitspunkte, und so insgesamt hinsichtlich der jeweiligen Einrückpunkte optimiert werden.

Das Referenzverfahren von $t_0$ bis $t_2$ kann dabei für die Fälle, bei denen die elektrische Maschine als Last betrieben wird, ähnlich erfolgen, wie bspw. in Fig. 6 gezeigt. Alternativ ist es für diesen Fall jedoch auch möglich, die elektrische Maschine in diesem Zeitraum auf einen bestimmten Arbeitspunkt einzuregeln und zu einem Zeitpunkt $t_1$ auf den Lastbetrieb umzuschalten (entweder im Kurzschluss oder im Leerlauf). Auch hierdurch ergibt sich eine Drehzahländerung, deren Drehzahlgradient zur Ermittlung des Schleppmomentes berechnet werden kann.

In entsprechender Weise kann anschließend beim Übergang zu dem eigentlichen Messverfahren in einem Zeitraum von $t_2$ bis $t_3$ wiederum ein aktiver Momenten- bzw. Drehzahlregeleingriff stattfinden, um die elektrische Maschine wieder auf den geregelten Betrieb umzuschalten. Anschließend wird ab dem Zeitpunkt $t_3$ der Kupplungsaktuator K auf den Übergangswert $K_{\ddot{U}}$ eingestellt. Zum Zeitpunkt $t_4$ kann dann wieder auf den Lastbetrieb umgeschaltet werden, so dass sich wiederum ein Drehzahlabfall ergibt.

Bei dieser Ausführungsform kann die elektrische Maschine zur Ermittlung des Eingriffspunktes der Reibkupplung als Last betrieben werden, wobei die Schaltkupplungen des zugeordneten Teilgetriebes geöffnet sind.

Zum Zeitpunkt $t_4$ wird für diesen Fall von einem Regelbetrieb auf den Lastbetrieb umgeschaltet, so dass sich wiederum eine Drehzahländerung ergibt, deren Drehzahlgradientwert zur Einstellung des Einrückpunktes der Reibkupplung verwendet werden kann.

Bei den Ausführungsformen, bei denen die elektrische Maschine jeweils durchgehend geregelt wird (entweder auf die Drehzahl $N_{EM}$ oder auf das Moment $M_{EM}$), ergibt sich die Drehzahländerung zum Zeitpunkt $t_4$ durch das Übertragen von Drehmoment von dem Antriebsmotor auf das Stufengetriebe (bei $K = K_{\ddot{U}}$).

Dabei ist gezeigt, dass auch hierbei die Arbeitspunkte variabel sein können, wie es durch entsprechende Pfeile im Bereich zwischen $t_5$ und $t_6$ in den Figuren 7b und 7c gezeigt ist.

Ansonsten laufen die Verfahren, bei denen die elektrische Maschine auf einen Arbeitspunkt geregelt wird, prinzipiell identisch ab, wie es in Fig. 5 gezeigt ist.

In Fig. 7a ist zudem gezeigt, dass auch der Wert von $K_{\ddot{U}}$ variabel ist. So kann der Wert von $K_{\ddot{U}}$ durch Wiederholungen des Verfahrens iterativ eingestellt werden, wie es durch einen seitlich zurückspringenden Pfeil angedeutet ist.

**Patentansprüche**

1. Verfahren zum Einstellen des Einrückpunktes einer Reibkupplung (16, 18) eines Stufengetriebes (10) für ein Kraftfahrzeug, wobei das Stufengetriebe (10) ein Doppelkupplungsgetriebe (10) ist, wobei die Reibkupplung (16, 18) mittels eines Kupplungsaktuators (K) gesteuert, vorzugsweise geregelt betätigbar ist, wobei ein Sollwert des Kupplungsaktuators (K) für den Einrückpunkt der Reibkupplung (16, 18) in Abhängigkeit eines zeitlichen Verlaufes einer physikalischen Variablen (N, M) eingestellt wird, der sich ausgehend von einem Übergangszustand nach Betätigen der Reibkupplung (16, 18) auf einen vordefinierten Übergangswert $K_{\ddot{U}}$ ergibt,
wobei eine elektrische Maschine (60) mit dem Stufengetriebe (10) verbunden ist, wobei eine Beeinflussung des Stufengetriebes (10) durch die elektrische Maschine (60) bei der Einstellung des Einrückpunktes der Reibkupplung (16, 18) berücksichtigt wird, und wobei die Einstellung des Einrückpunktes der Reibkupplung (16, 18) in einem nicht aktiven Zweig des Doppelkupplungsgetriebes (10) erfolgt, während das Fahrzeug (11) fährt.

2. Verfahren nach Anspruch 1, wobei das Herstellen des Übergangszustandes beinhaltet, die elektrische Maschine (60) auf einen Übergangs-Arbeitspunkt ($N_{\ddot{U}}$; $M_{\ddot{U}}$) einzustellen.

3. Verfahren nach Anspruch 2, wobei das Herstellen des Übergangszustandes beinhaltet, die elektrische Maschine (60) auf eine Übergangsdrehzahl ($N_{\ddot{U}}$) zu regeln.

4. Verfahren nach Anspruch 3, wobei der Sollwert des Kupplungsaktuators (K) für den Einrückpunkt der Reibkupplung (16, 18) in Abhängigkeit eines zeitlichen Verlaufes eines elektrischen Stromes ($I_{EM}$) der elektrischen Maschine (60) eingestellt wird, der sich ausgehend von dem Übergangszustand nach Betätigen der Reibkupplung (16, 18) auf den Übergangswert ($K_{\ddot{U}}$) ergibt.

5. Verfahren nach Anspruch 2, wobei das Herstellen des Übergangszustandes beinhaltet, die elektrische Maschine (60) auf ein Übergangsdrehmoment ($M_{\ddot{U}}$) zu regeln.

6. Verfahren nach Anspruch 5, wobei der Sollwert des Kupplungsaktuators (K) für den Einrückpunkt der Reibkupplung (16, 18) in Abhängigkeit eines zeitlichen Verlaufes einer Drehzahl ($N_{EM}$) eingestellt wird, der sich ausgehend von dem Übergangszustand nach Betätigen der Reibkupplung (16, 18) auf den Übergangswert ($K_{\ddot{U}}$) ergibt.

**7.** Verfahren nach Anspruch 1, wobei die elektrische Maschine (60) als Last an das Stufengetriebe (10) angekoppelt wird, wobei das Herstellen des Übergangszustandes beinhaltet, wenigstens eine Schaltkupplung (SK) zum Ein- und Auslegen einer Gangstufe des Stufengetriebes (10) mittels eines Schaltaktuators (S) zu betätigen und wobei der Sollwert des Kupplungsaktuators (K') für den Einrückpunkt der Reibkupplung (16, 18) in Abhängigkeit eines zeitlichen Verlaufes einer Drehzahl ($N_{EM}$) eingestellt wird, der sich ergibt, wenn nach dem Herstellen des Übergangszustandes die Schaltkupplung (SK) geöffnet wird.

**8.** Verfahren nach Anspruch 7, wobei die elektrische Maschine (60) während des Übergangszustandes im Leerlauf betrieben wird.

**9.** Verfahren nach Anspruch 7, wobei die elektrische Maschine (60) während des Übergangszustandes im Kurzschluss betrieben wird.

**10.** Verfahren nach einem der Ansprüche 7 - 9, wobei der Schaltaktuator (S) in dem Übergangszustand dazu angesteuert wird, um die zugeordnete Schaltkupplung (SK) zu schließen.

**11.** Verfahren nach einem der Ansprüche 7 - 9, wobei der Schaltaktuator (S) in dem Übergangszustand dazu angesteuert wird, um über die Schaltkupplung (SK) ein größeres Drehmoment zu übertragen als über die Reibkupplung (16, 18), ohne die zugeordnete Schaltkupplung (SK) zu schließen.

**12.** Verfahren nach einem der Ansprüche 7 - 11, wobei die zur Einstellung des Einrückpunktes der Reibkupplung (16, 18) verwendete Schaltkupplung (SK) der Gangstufe zugeordnet ist, die zu der im aktiven Zweig verwendeten Gangstufe benachbart ist.

**13.** Verfahren nach einem der Ansprüche 1 - 12, wobei der Kupplungsaktuator (K) in dem Übergangszustand auf einen Übergangswert ($K_{Ü}$) eingestellt wird, der dem bisherigen Sollwert für den Einrückpunkt entspricht.

**14.** Verfahren nach einem der Ansprüche 1 bis 13, wobei vor Einstellung des Einrückpunktes eine Referenzmessung ohne Betätigung der Reibkupplung (16, 18) durchgeführt wird, um das hierbei wirkende Schleppmoment zu berücksichtigen.

## Claims

**1.** Method for setting the engagement point of a friction clutch (16, 18) of a multi-step transmission (10) for a motor vehicle, wherein the multi-step transmission (10) is a double clutch transmission (10), wherein the friction clutch (16, 18) can be activated, controlled, preferably closed-loop controlled, by means of a clutch actuator (K), wherein a set point value of the clutch actuator (K) is set for the engagement point of the friction clutch (16, 18) as a function of a time profile of a physical variable (N, M) which occurs starting from a transition state after activation of the friction clutch (16, 18) to a predefined transition value $K_{Ü}$,
wherein an electric machine (60) is connected to the multi-step transmission (10), wherein influencing of the multi-step transmission (10) by the electric machine (60) is taken into account in the setting of the engagement point of the friction clutch (16, 18), and wherein the engagement point of the friction clutch (16, 18) is set in a non-active branch of the double clutch transmission (10), while the vehicle (11) is travelling.

**2.** Method according to Claim 1, wherein the production of the transition state includes setting the electric machine (60) to a transition working point ($N_{Ü}$; $M_{Ü}$).

**3.** Method according to Claim 2, wherein the production of the transition state includes carrying out closed-loop control of the electric machine (60) to a transition rotational speed ($N_{Ü}$).

**4.** Method according to Claim 3, wherein the set point value of the clutch actuator (K) for the engagement point of the friction clutch (16, 18) is set as a function of a time profile of an electric current ($I_{EM}$) of the electric machine (60), which electric current ($I_{EM}$) occurs starting from the transition state after activation of the friction clutch (16, 18) to the transition value ($K_{Ü}$).

**5.** Method according to Claim 2, wherein the production of the transition state includes carrying out closed-loop control of the electric machine (60) to a transition torque ($M_{Ü}$).

6. Method according to Claim 5, wherein the set point value of the clutch actuator (K) for the engagement point of the friction clutch (16, 18) is set as a function of a time profile of a rotational speed ($N_{EM}$) which occurs starting from the transition state after activation of the friction clutch (16, 18) to the transition value ($K_{Ü}$).

7. Method according to Claim 1, wherein the electric machine (60) is coupled as a load to the multi-step transmission (10), wherein the production of the transition state includes activating at least one shift clutch (SK) for the engagement and disengagement of a gearspeed of the multi-step transmission (10) by means of a shift actuator (S), and wherein the set point value of the clutch actuator (K') for the engagement point of the friction clutch (16, 18) is set as a function of a time profile of a rotational speed ($N_{EM}$) which occurs if the shift clutch (SK) is opened after the transition state is produced.

8. Method according to Claim 7, wherein the electric machine (60) is operated in the idling mode during the transition state.

9. Method according to Claim 7, wherein the electric machine (60) is operated in the short-circuit mode during the transition state.

10. Method according to one of Claims 7-9, wherein the shift actuator (S) is actuated in the transition state in order to close the assigned shift clutch (SK).

11. Method according to one of Claims 7-9, wherein the shift actuator (S) is actuated in the transition state in order to transmit a larger torque across the shift clutch (SK) than across the friction clutch (16, 18), without closing the assigned shift clutch (SK).

12. Method according to one of Claims 7-11, wherein the shift clutch (SK) which is used for setting the engagement point of the friction clutch (16, 18) is assigned to the gearspeed which is adjacent to the gearspeed which is used in the active branch.

13. Method according to one of Claims 1-12, wherein the clutch actuator (K) in the transition state is set to a transition value ($K_{Ü}$) which corresponds to the previous set point value for the engagement point.

14. Method according to one of Claims 1 to 13, wherein, before the engagement point is set, a reference measurement is carried out without activation of the friction clutch (16, 18) in order to take into account the drag torque acting in the process.

**Revendications**

1. Procédé de réglage du point d'insertion d'un embrayage à friction (16, 18) de boîte de vitesses à étages (10) de véhicule automobile, la boîte de vitesses à étages (10) étant une boîte de vitesses à double embrayage (10), l'embrayage à friction (16, 18) pouvant être actionné de façon à être commandé, de préférence réglé, à l'aide d'un actionneur d'embrayage (K), une valeur théorique de l'actionneur d'embrayage (K) étant réglée pour le point d'insertion de l'embrayage à friction (16, 18) en fonction d'une courbe dans le temps d'une variable physique (N, M) obtenue en partant d'un état de transition suivant l'actionnement de l'embrayage à friction (16, 18) pour atteindre une valeur de transition $K_{Ü}$ prédéfinie ;
un moteur électrique (60) étant relié à la boîte de vitesses à étages (10), une influence de la boîte de vitesses à étages (10) par le moteur électrique (60) étant prise en compte lors du réglage du point d'insertion de l'embrayage à friction (16, 18) et le réglage du point d'insertion de l'embrayage à friction (16, 18) se produisant dans une branche non active de la boîte de vitesses à double embrayage (10) en même temps que le véhicule (11) avance.

2. Procédé selon la revendication 1, la mise en place de l'état de transition contenant le réglage du moteur électrique (60) pour l'amener à un point de travail de transition ($N_{Ü}$ ; $M_{Ü}$).

3. Procédé selon la revendication 2, la mise en place de l'état de transition contenant le réglage du moteur électrique (60) pour l'amener à une vitesse de rotation de transition ($N_{Ü}$).

4. Procédé selon la revendication 3, la valeur théorique de l'actionneur d'embrayage (K) pour le point d'insertion de l'embrayage à friction (16, 18) étant réglée en fonction d'une courbe dans le temps d'un courant électrique ($I_{EM}$) du moteur électrique (60) obtenu en partant de l'état de transition suivant l'actionnement de l'embrayage à friction (16, 18) jusqu'à atteindre la valeur de transition ($K_{\ddot{U}}$).

5. Procédé selon la revendication 2, la mise en place de l'état de transition contenant le réglage du moteur électrique (60) pour atteindre un couple de rotation de transition ($M_{\ddot{U}}$).

6. Procédé selon la revendication 5, la valeur théorique de l'actionneur d'embrayage (K) pour le point d'insertion de l'embrayage à friction (16, 18) étant réglée en fonction d'une courbe dans le temps d'une vitesse de rotation ($N_{EM}$) obtenue en partant de l'état de transition suivant l'actionnement de l'embrayage à friction (16, 18) jusqu'à atteindre la valeur de transition ($K_{\ddot{U}}$).

7. Procédé selon la revendication 1, le moteur électrique (60) étant couplé sous la forme d'une charge à la boîte de vitesses à étages (10), la mise en place de l'état de transition contenant au moins un embrayage de changement de vitesse (SK) permettant de mettre et de retirer un rapport d'engrenages de la boîte de vitesses à étages (10) à l'aide d'un actionneur de changement de vitesse (S) actionné et la valeur théorique de l'actionneur d'embrayage (K') prévue pour le point d'insertion de l'embrayage à friction (16, 18) étant réglée en fonction d'une courbe dans le temps d'une vitesse de rotation ($N_{EM}$) obtenue lors de l'ouverture de l'embrayage de changement de vitesse (SK), après mise en place de l'état de transition.

8. Procédé selon la revendication 7, le moteur électrique (60) étant entraîné à vide pendant l'état de transition.

9. Procédé selon la revendication 7, le moteur électrique (60) étant entraîné en court-circuit pendant l'état de transition.

10. Procédé selon l'une quelconque des revendications 7 à 9, l'actionneur de changement de vitesse (S) étant commandé pour fermer, dans l'état de transition, l'embrayage de changement de vitesse (SK) associé.

11. Procédé selon l'une quelconque des revendications 7 à 9, l'actionneur de changement de vitesse (S) étant commandé pour transmettre, dans l'état de transition, un plus grand couple de rotation via l'embrayage de changement de vitesse (SK) que via l'embrayage à friction (16, 18) sans fermer l'embrayage de changement de vitesse (SK) associé.

12. Procédé selon l'une quelconque des revendications 7 à 11, l'embrayage de changement de vitesse (SK) utilisé pour régler le point d'insertion de l'embrayage à friction (16, 18) étant associé au rapport d'engrenages connexe au rapport d'engrenages utilisé dans la branche active.

13. Procédé selon l'une quelconque des revendications 1 à 12, l'actionneur d'embrayage (K) étant réglé, dans l'état de transition, pour atteindre une valeur de transition ($K_{\ddot{U}}$) correspondant à la valeur théorique précédente du point d'insertion.

14. Procédé selon l'une quelconque des revendications 1 à 13, une mesure de référence sans actionnement de l'embrayage à friction (16, 18) étant réalisée avant le réglage du point d'insertion pour tenir compte du couple de remorquage agissant par ce biais.

Fig.1

Fig.2

18

Fig.3

Fig.4

Fig.5a

Fig.5b

Fig.5c

Fig.6a

Fig.6b

Fig.6c

Fig.7a

Fig.7b

Fig.7c

EP 2 325 512 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19652244 A1
- WO 2004076224 A1
- WO 2004076225 A1
- EP 0931961 A1
- EP 0859171 A1
- DE 19540921 A1
- DE 19939818 C1
- DE 10244393 A1
- DE 10054867 A1
- DE 10113700 A1
- EP 1741950 A1
- DE 10101597 A1
- DE 19751455 A1
- DE 10224064 A1
- EP 1067008 A1
- WO 2009065591 A
- EP 2107264 A